# EUROPEAN PATENT APPLICATION

(11) **EP 4 539 607 A1**
(43) Date of publication of application: **16.04.2025**
(21) Application number: 23202320.0
(22) Date of filing: 09.10.2023
(51) Int. Cl.: H05B 47/18, H05B 47/175, H04B 5/00

(54) **DEVICES AND METHODS FOR NFC-DALI PROTOCOL CONVERSION**

(71) Applicant: Zumtobel Lighting GmbH, 6850 Dornbirn (AT)
(72) Inventor: Steffens, Thomas, 6851 Dornbirn (AT); Heim, Andreas, 6851 Dornbirn (AT)
(74) Representative: Rupp, Christian

(57) **Abstract**

Disclosed is a device (1) for NFC-DALI protocol conversion. The device (1) comprises an NFC interface (11), a configuration information memory (12), a control unit (13), and a DALI interface (14). The NFC interface (11) is configured to receive (81) information from an NFC-enabled handheld device (2A, 2B) being connectable to the NFC interface (11). The control unit (13) is configured to distinguish (82) the received information into one or more of: DALI command information, and configuration information; store (83) the received configuration information in the configuration information memory (12); and generate (86) a transmittable DALI command in accordance with the received DALI command information. The DALI interface (14) is configured to transmit (87) the transmittable DALI command on a DALI bus (3) being connectable to the DALI interface (14); and transmit (85) the stored configuration information on the DALI bus (3) upon request of a DALI-enabled device (4) being connectable to the DALI bus (3). This avoids a plurality of NFC interfaces, NFC protocols and configuration tools per luminaire.

## Description

### Technical Field

The present disclosure relates generally to the field of lighting technology. More particularly, the present disclosure relates to a device and a method for NFC-DALI protocol conversion, and further to a luminaire and a lighting control bus participant comprising said device, as well as to a lighting control bus system comprising said lighting control bus participant.

### Background Art

In today's lighting installations, networking capability according to Digital Addressable Lighting Interface (DALI) standards has become so widespread that already individual luminaires may comprise a plurality of DALI-capable devices (driver, sensor, intelligent light module, ...), which doesn't make a configuration any easier.

A very popular type of configuration is based on Near Field Communications (NFC). Using NFC for configuration of lighting gear is known per se. But as this type of configuration works per gear, a plurality of NFC interfaces, NFC protocols and/or configuration tools may be needed per luminaire.

### Summary

It is an object to overcome the above-mentioned and other drawbacks, in particular by a simple NFC-based access to a plurality of DALI-enabled devices.

The foregoing and other objects are achieved by the features of the independent claims. Further implementation forms are apparent from the dependent claims, the description and the figures.

According to a first aspect, a device for NFC-DALI protocol conversion is provided. The device comprises an NFC interface, a configuration information memory, preferably a DALI configuration information memory, a control unit, and a DALI interface. The NFC interface is configured to receive information from an NFC-enabled handheld device being connectable to the NFC interface. The control unit is configured to distinguish the received information into one or more of: DALI command information, and configuration information; store the received configuration information in the configuration information memory; and generate a transmittable DALI command in accordance with the received DALI command information. The DALI interface is configured to transmit the transmittable DALI command on a DALI bus being connectable to the DALI interface; and transmit the stored configuration information on the DALI bus upon request of a DALI-enabled device being connectable to the DALI bus.

The NFC interface may comprise an NFC transponder.

The NFC interface may comprise an NFC reader.

The NFC-enabled handheld device may comprise one of: an NFC-enabled smart device, and an NFC reader being connectable to a computer.

The NFC-enabled handheld device may comprise an NFC transponder.

The received information may comprise NDEF-formatted information.

The DALI interface may further be configured to receive further configuration information from the DALI-enabled device; the control unit may further be configured to store the received further configuration information in the configuration information memory; and the NFC interface may further be configured to transmit the stored configuration information upon request of the NFC-enabled handheld device.

The device may be configured to operate as an application controller in accordance with DALI Part 103.

The device may be configured to operate as an occupancy sensor with regard to the NFC-enabled handheld device in accordance with DALI Part 303.

The NFC interface may further be configured to detect an occupancy event with regard to the NFC-enabled handheld device; and the control unit may further be configured to generate a transmittable DALI command being indicative of the occupancy event upon such enablement.

The NFC interface may further be configured to detect a vacancy event with regard to the NFC-enabled handheld device; and the control unit may further be configured to generate a transmittable DALI command being indicative of the vacancy event upon such enablement and upon prior transmission of the transmittable DALI command being indicative of the occupancy event.

According to a second aspect, a luminaire is provided, comprising a device for NFC-DALI protocol conversion of the first aspect; and an LED light source.

According to a third aspect, a lighting control bus participant is provided, comprising a device for NFC-DALI protocol conversion of the first aspect.

According to a fourth aspect, a lighting control bus system is provided, comprising a lighting control bus participant of the third aspect.

According to a fifth aspect, a method for NFC-DALI protocol conversion is provided. The method comprises receiving information from an NFC-enabled handheld device being connectable to the NFC interface. The method further comprises distinguishing the received information into one or more of: DALI command information, and configuration information. The method further comprises storing the received configuration information in a configuration information memory. The method further comprises transmitting the stored configuration information on a DALI bus upon request of a DALI-enabled device being connectable to the DALI bus. The method further comprises generating a transmittable DALI command in accordance with the received DALI command information; and transmitting the transmittable DALI command on the DALI bus.

### Advantageous Effects

The present disclosure provides a DALI-enabled device being capable of NFC-DALI protocol conversion, alongside of collection of information via DALI and providing the collected information via NFC.

This provides
- a single/central and flexibly positionable NFC interface,
- configurability of non-NFC devices,
- no need for third-party tools and associated license fees,
- no need for firmware updates upon extension of configuration options,
- a mere need for app(lication) update in case of functional extensions or adjustments to a new DALI standard, when using NFC devices according to KISS,
- direct access to all characters via keyboard also via smartphone / tablet,
- firmware update capability of DALI-enabled devices via NFC, and
- a standalone gateway device for temporary use in an existing DALI bus system for servicing purposes

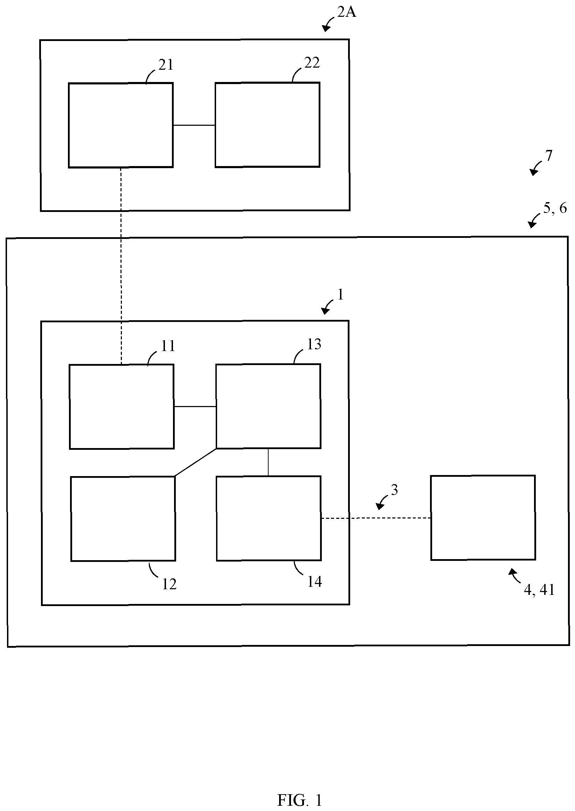

In a simplest manifestation, the DALI-enabled device comprises an NFC transponder as its NFC interface (see FIG. 1). This requires a smartphone or tablet as a counterpart, including a corresponding app(lication). If the transponder's memory is written to in NDEF format, such NDEF texts are turned into transmittable DALI commands. Subsequently, the memory is deleted automatically.

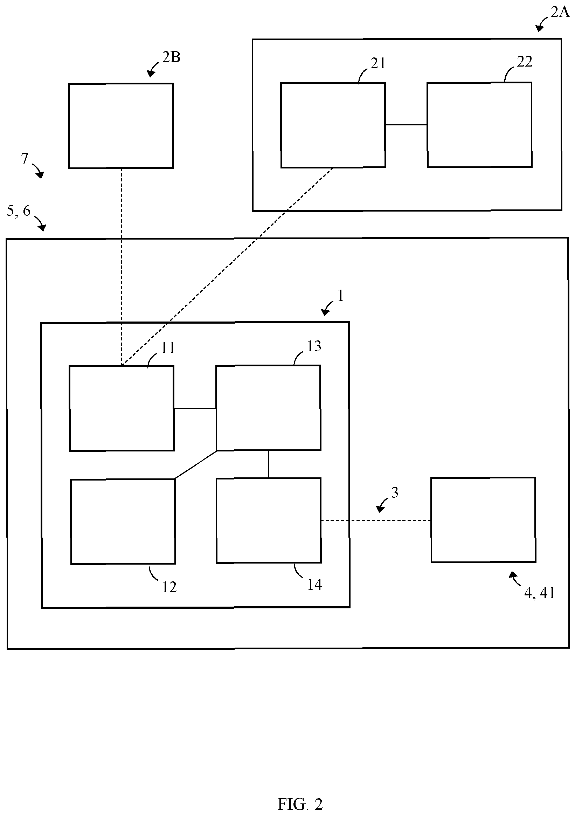

Alternatively, the DALI-enabled device may comprise an NFC reader instead of an NFC transponder (see FIG. 2). In this scenario, no smart device is required - an NFC transponder suffices. NDEF texts may thus be brought to the DALI-enabled device via the NFC transponder. For example, an installer may use a number of NFC transponders having dedicated DALI commands based on which configurations may be made without a smart device. The use of a smart device is not precluded, however.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIGs. 1, 2: respectively illustrate a lighting control bus system in accordance with the present disclosure in interaction with NFC-enabled handheld devices; and
- FIG. 3: illustrates a method for NFC-DALI protocol conversion in accordance with the present disclosure.

### Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

FIG. 1 illustrates a lighting control bus system 7 in accordance with the present disclosure in interaction with an NFC-enabled handheld device 2A.

The lighting control bus system 7 comprises a luminaire 5 or, more broadly, a lighting control bus participant 6.

In turn, the lighting control bus participant 6 comprises a device 1 for NFC-DALI protocol conversion. In case of a luminaire 5, an LED light source 41 is also included.

As used herein, DALI may refer to a set of standards providing especially lighting gear with networking, configuration and management capabilities.

As used herein, NFC may refer to a set of standards providing contactless low-speed data transfer between mobile electronic devices being in close proximity to one another (i.e., < 4cm).

The device 1 itself comprises an NFC interface 11, a configuration information memory 12, a control unit 13, and a DALI interface 14. The configuration information memory 12 may be for instance a DALI configuration information memory.

Note that the scenario of FIG. 1 involves an NFC-enabled smart device as the NFC-enabled handheld device 2A, including an NFC interface 21 and an NFC app(lication) 22, or an NFC reader as the NFC-enabled handheld device 2A, the NFC reader including the NFC interface 21 and being connectable to a computer on which the NFC app(lication) 22 is executed, and that the device 1 comprises an NFC transponder as the NFC interface 11.

The NFC interface 11 is configured to receive 81 information from the NFC-enabled handheld device 2A being connectable to the NFC interface 11 (see dotted line indicated between the NFC interfaces 11 and 21).

The received information may comprise NDEF-formatted information (e.g., NDEF texts).

As used herein, NDEF or NFC Data Exchange Format may refer to a standardized data format being used to describe how a set of actions are to be encoded onto a NFC tag or to be exchanged between two active NFC devices.

The control unit 13 is configured to distinguish 82 the received information into one or more of: DALI command information, and configuration information, e.g. a DALI configuration information.

As used herein, configuration information may refer to DALI-related configuration information or system configuration information, such as a regulation behavior/response, a standby behavior/response, or a response to external parameters such as environmental effects or additional external signals.

The DALI command information and configuration information may be created and transmitted using free-of-charge app(lication)s 22.

For example, a user interface may display DALI commands in clear text and convert them into a required format.

Based on such app(lication)s, also more complex procedures may be implemented, such as an electric current configuration of a particular DALI-enabled LED driver 4. To this end, the device 1 may monitor/record certain DALI information being communicated on the DALI bus 3, or query said information, or actively request storage of said information in its memory 12 by e.g. a DALI application controller. Such information may be represented as memory content of an NFC transponder. NDEF would not be required in this case since interpretation of the information by a dedicated app(lication) is needed anyway.

The control unit 13 is further configured to store 83 the received configuration information, if any, in the configuration information memory 12. In turn, the DALI interface 14 is configured to transmit 85 (not shown) the stored configuration information on the DALI bus 3 upon request of a DALI-enabled device 4, such as the LED light source 41, being connectable to the DALI bus 3.
configuration information is merely stored as-is within the memory 12 of the device 1 rather than interpreted (passive mode), and can be requested by DALI-enabled devices 4 via the DALI bus 3. The device 1 only takes care of a data transfer between data source (e.g., smart device or NFC transponder) and data sink. A protocol (re)definition is unnecessary. The device 1 remains agnostic of any protocol extensions. It is only required to distinguish the received information into DALI command information and configuration information, respectively. The configuration information is to be interpreted by the DALI-enabled device 4 to be configured.

The control unit 13 is further configured to generate 86 a transmittable DALI command in accordance with the received DALI command information, if any. Likewise, the DALI interface 14 is further configured to transmit 87 the transmittable DALI command on a DALI bus 3 being connectable to the DALI interface 14.

As such, the device 1 transmits any DALI command information as DALI commands via the DALI bus 3 (active mode).

The device 1 may be configured to operate as an application controller in accordance with DALI Part 103 (IEC 62386-103). As used herein, a DALI application controller may refer to a device being responsible for communication between input gear, such as sensors, switches, push buttons, etc. and control gear, such as lighting drivers.

The device 1 may further be configured to operate as an occupancy sensor with regard to the NFC-enabled handheld device 2A in accordance with DALI Part 303 (IEC 62386-303). As used herein, a DALI occupancy sensor may refer to a device being capable of detecting an occupancy (or vacancy) of the NFC interface 11 and of issuing corresponding occupancy (or vacancy) events.

Accordingly, the NFC interface 11 may further be configured to detect an occupancy (or a vacancy) event with regard to the NFC-enabled handheld device 2A.

In other words, an appearance (or disappearance) of an NFC counterpart is communicated via an occupancy (or vacancy) event. Said events are communicated (unless they have been deactivated by a DALI application controller) to notify DALI-enabled devices 4 that (potentially) new configuration information may be available or that DALI commands can be expected. For example, a DALI application controller could request the new configuration information from the device 1 or remain "silent" for a particular period to avoid collisions.

On its part, the control unit 13 may further be configured to generate 84 a transmittable DALI command being indicative of the occupancy event upon such enablement, or to generate 88 a transmittable DALI command being indicative of the vacancy event upon such enablement and upon prior transmission of the transmittable DALI command being indicative of the occupancy event.

The DALI interface 14 may further be configured to receive further configuration information from the DALI-enabled device 4. In turn, the control unit 13 may further be configured to store the received further configuration information in the configuration information memory 12 and the NFC interface 11 may further be configured to transmit the stored configuration information upon request of the NFC-enabled handheld device 2A.

In summary, the device 1 provides a simple NFC-based access to a plurality of DALI-enabled devices 4, in all directions, using NDEF.

FIG. 2 illustrates a lighting control bus system 7 in accordance with the present disclosure in interaction with an NFC-enabled handheld device 2B.

Note that the scenario of FIG. 2 involves an NFC transponder as the NFC-enabled handheld device 2B, and that the device 1 comprises an NFC reader as the NFC interface 11.

Other than that, the details indicated in connection with FIG. 1 apply for FIG. 2, too. For example, the NFC-enabled handheld device 2A of FIG. 1 may also be used in the scenario of FIG. 2.

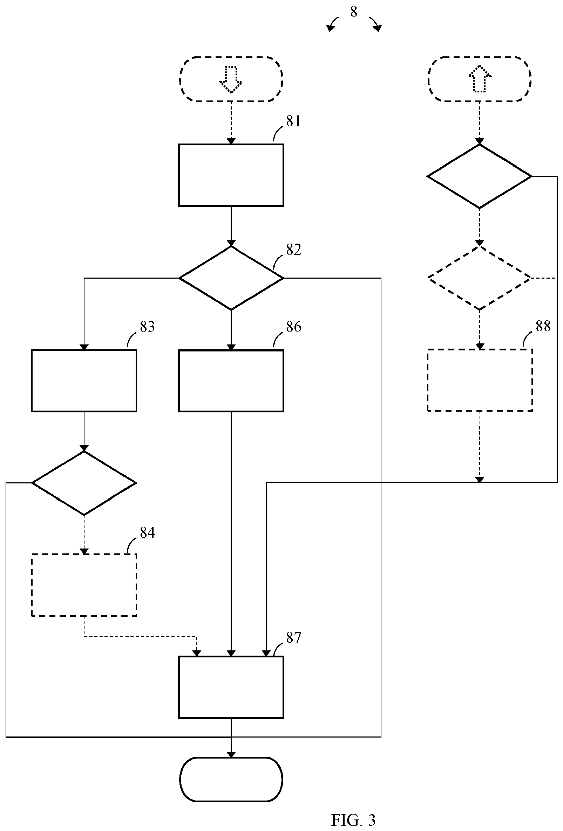

FIG. 3 illustrates a method 8 for NFC-DALI protocol conversion in accordance with the present disclosure.

Suppose an appearance of an NFC-enabled handheld device 2A, 2B being connectable to an NFC interface 11 of the device 1 of FIGs. 1, 2, within a wireless coverage of the NFC interface 11 (=occupancy event). This is shown on the left of FIG. 3.

The method 8 comprises a step of receiving 81 information from the NFC-enabled handheld device 2A, 2B.

The method 8 further comprises distinguishing 82 the received information into one or more of: DALI command information, and configuration information.

The method 8 further comprises storing 83 the received configuration information, if any, in a configuration information memory 12.

The method 8 may further comprise generating 84 a transmittable DALI command being indicative of the occupancy event upon such enablement.

The method 8 may further comprise transmitting 85 (not shown) the stored configuration information on a DALI bus 3 upon request of a DALI-enabled device 4 being connectable to the DALI bus 3.

The method 8 further comprises generating 86 a transmittable DALI command in accordance with the received DALI command information; and transmitting 87 the transmittable DALI command on the DALI bus 3.

Now suppose a disappearance of the NFC-enabled handheld device 2A, 2B within the wireless coverage of the NFC interface 11 (=vacancy event). This is shown on the right of FIG. 3.

Accordingly, the method 8 may further comprise generating 88 a transmittable DALI command being indicative of the vacancy event (i) upon such enablement and (ii) upon prior transmission of the transmittable DALI command being indicative of the occupancy event.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A device (1) for NFC-DALI protocol conversion, comprising
an NFC interface (11), configured to
- receive (81) information from an NFC-enabled handheld device (2A, 2B) being connectable to the NFC interface (11);
a configuration information memory (12);
a control unit (13), configured to
- distinguish (82) the received information into one or more of: DALI command information, and configuration information;
- store (83) the received configuration information in the configuration information memory (12); and
- generate (86) a transmittable DALI command in accordance with the received DALI command information; and
a DALI interface (14), configured to
- transmit (85) the stored configuration information on the DALI bus (3) upon request of a DALI-enabled device (4) being connectable to the DALI bus (3); and
- transmit (87) the transmittable DALI command on a DALI bus (3) being connectable to the DALI interface (14).

2. The device (1) of claim 1,
the NFC interface (11) comprising an NFC transponder.

3. The device (1) of claim 1,
the NFC interface (11) comprising an NFC reader.

4. The device (1) of claim 2 or claim 3,
the NFC-enabled handheld device (2A) comprising one of: an NFC-enabled smart device, and an NFC reader being connectable to a computer.

5. The device (1) of claim 3,
the NFC-enabled handheld device (2B) comprising an NFC transponder.

6. The device (1) of any one of the claims 1-5,
the received information comprising NDEF-formatted information.

7. The device (1) of any one of the claims 1-6,
the DALI interface (14) further configured to
- receive further configuration information from the DALI-enabled device (4);
the control unit (13) further configured to
- store the received further configuration information in the configuration information memory (12); and
the NFC interface (11) further configured to
- transmit the stored configuration information upon request of the NFC-enabled handheld device (2A).

8. The device (1) of any one of the claims 1 - 7, configured to
- operate as an application controller in accordance with DALI Part 103.

9. The device (1) of any one of the claims 1 - 7, configured to
- operate as an occupancy sensor with regard to the NFC-enabled handheld device (2A, 2B) in accordance with DALI Part 303.

10. The device (1) of claim 9,
the NFC interface (11) further configured to
- detect an occupancy event with regard to the NFC-enabled handheld device (2A, 2B); and
the control unit (13) further configured to
- generate (84) a transmittable DALI command being indicative of the occupancy event upon such enablement.

11. The device (1) of claim 10,
the NFC interface (11) further configured to
- detect a vacancy event with regard to the NFC-enabled handheld device (2A, 2B); and
the control unit (13) further configured to
- generate (88) a transmittable DALI command being indicative of the vacancy event upon such enablement and upon prior transmission of the transmittable DALI command being indicative of the occupancy event.

12. A luminaire (5), comprising
a device (1) for NFC-DALI protocol conversion of any one of the claims 1 - 11; and
an LED light source (41).

13. A lighting control bus participant (6), comprising
a device (1) for NFC-DALI protocol conversion of any one of the claims 1 - 11.

14. A lighting control bus system (7), comprising
a lighting control bus participant (6) of claim 13.

15. A method (8) for NFC-DALI protocol conversion, comprising
- receiving (81) information from an NFC-enabled handheld device (2A, 2B) being connectable to the NFC interface (11), the received information comprising DALI command information and configuration information;
- distinguishing (82) the received information into the DALI command information and the configuration information;
- storing (83) the received configuration information in a configuration information memory (12);
- transmitting (85) the stored configuration information on a DALI bus (3) upon request of a DALI-enabled device (4) being connectable to the DALI bus (3);
- generating (86) a transmittable DALI command in accordance with the received DALI command information; and
- transmitting (87) the transmittable DALI command on the DALI bus (3).
